# EUROPÄISCHE PATENTANMELDUNG

(11) **EP 1 621 398 A1**
(43) Veröffentlichungstag der Anmeldung: **01.02.2006**
(21) Anmeldenummer: 04017798.2
(22) Anmeldetag: 28.07.2004
(51) Int. Cl.: B60P 7/13, B60P 1/64

(54) **Vorrichtung zur Verriegelung eines Containers an einem Fahrzeugchassis**

(71) Anmelder: Stuht, Holger, 24537 Neumünster (DE); Backof, Kurt, 21465 Wentorf (DE)
(72) Erfinder: Stuht, Holger, 24537 Neumünster (DE); Backof, Kurt, 21465 Wentorf (DE)
(74) Vertreter: Meyer, Ludgerus

(57) **Zusammenfassung**

Die Erfindung betrifft eine Vorrichtung zur lösbaren Verriegelung eines Containers an einem Fahrzeugchassis, wahlweise mittels eines axialverschiebbaren und in einen Verriegelungsbeschlag des Containers seitlich einführbaren Riegelbolzens (5) oder mittels eines drehbaren und in den Verriegelungsbeschlag des Containers von unten einführbaren Drehzapfens (2). Erfindungsgemäß sind der Riegelbolzen (5) und der Drehzapfen (2) in einem gemeinsamen Gehäuse (6) aufgenommen und der Riegelbolzen (5) und der Drehzapfen (2) sind gemeinsam betätigbar.

## Beschreibung

Die Erfindung betrifft eine Vorrichtung zur lösbaren Verriegelung eines Containers an einem Fahrzeugchassis nach dem Oberbegriff des Anspruchs 1.

Der Gütertransport, insbesondere im Fernverkehr, erfolgt heute zum großen Teil mittels Container. Sie werden auf Fahrzeugchassis transportiert, die in der Regel als Sattelauflieger ausgebildet sind und von einem Zugfahrzeug gezogen werden.

Auf solchen Fahrzeugchassis können übliche Container kurzer Länge transportiert werden. Es können jedoch auch Container mit sogenanntem Gooseneck-Tunnel transportiert werden, die an ihrer Vorderseite eine unterseitige Ausnehmung aufweisen, in der der Hals des Chassis mit Königszapfen zur Verbindung von Sattelauflieger und Zugfahrzeug aufgenommen ist. Um sowohl kurze als auch lange Container mit Gooseneck-Tunnel auf einem solchen Fahrzeugchassis transportieren zu können, sind unterschiedliche Verriegelungen der Container mit dem Fahrzeugchassis erforderlich.

Wenn ein kurzer Container auf dem hinteren Teil des Fahrzeugchassis transportiert werden soll, genügt es, wenn der Container mittels standardisierter Drehverschlüsse verriegelt wird, die von unten in die an den Ecken des Containers angeordneten Verriegelungsbeschläge eingreifen. Zur Verriegelung werden diese Verschlüsse in der Regel von Hand um 90° verschwenkt, so dass der pilzförmige Kopf des Verriegelungsverschlusses in den Beschlag des Containers eingreift.

Bei Containern mit Gooseneck-Tunnel erfolgt die hintere Verriegelung des Containers über die genannten Drehverriegelungen, während an der Vorderseite des Containers an dem Fahrzeugchassis angeordnete horizontal bewegbare Riegelbolzen vorgesehen sind, die stirnseitig in die geeignet gestalteten Verriegelungsbeschläge des Containers eingreifen.

Um auf Fahrzeugchassis mit Gooseneck-Kupplung auch Container ohne Gooseneck-Tunnel transportieren zu können, gibt die DE G 91 14 903.7 U1 ein System mit mehreren Verriegelungen an, bei denen zur Aufnahme eines Containers mit Gooseneck-Tunnel an der Vorderseite axial verschiebbare Riegelbolzen und an der Rückseite des Containers Drehverschlüsse verwendet werden, und zum Transport von Containern ohne Gooseneck-Tunnel oder Container kurzer Bauweise der Container auf den rückwärtigen Teil des Fahrzeugchassis aufgesetzt und mittels vier Drehverschlüssen von unten her befestigt wird. Zum Transport von Containern ohne Gooseneck-Tunnel werden vorderseitig ebenfalls zwei Drehverschlüsse verwendet, die auch an der Rückseite des Containers Verwendung finden, jedoch dort in eine etwas größere Höhe über dem Fahrzeugchassis hochgeklappt werden können, um eine ebene Auflagefläche für den Container zu erhalten. Ein mit solchen Verschlüssen versehenes Fahrzeugchassis ist sowohl für Container kurzer als auch langer Bauart mit oder ohne Gooseneck-Tunnel verwendbar. Ferner können auf einem solchen Chassis auch zwei kurze Container aufgesetzt werden, von denen der vordere Container gegenüber dem hinteren Container um die Absatzhöhe des Gooseneck-Vorderteils des Fahrzeugchassis angehoben ist.

Die Verriegelungseinrichtungen eines solchen Fahrzeugchassis müssen jeweils von Hand in die richtige Position gebracht werden, abhängig von der Art des zu transportierenden Containers. Dabei ist nicht auszuschließen, dass aus Nachlässigkeit eine falsche Verriegelung betätigt wird, so dass aufgrund fehlender oder falscher Verriegelung gefährliche Situationen entstehen können.

Aus der EP 0 878 352 ist eine Verriegelung für Container an einem Fahrzeugchassis bekannt, welche in einem Gehäuse einen Riegelbolzen zur stirnseitigen Einführung in einen Containerbeschlag sowie einen Drehzapfen zur vertikalen Einfuhr in den Containerbeschlag aufweist, wobei Riegelbolzen und Drehzapfen gemeinsam betätigbar sind. Die dort offenbarte Betätigungsmechanik ist allerdings sehr aufwendig.

Der Erfindung liegt die Aufgabe zugrunde, eine Vorrichtung zur lösbaren Verriegelung eines Containers an einem Fahrzeugchassis anzugeben, die eine Fehlbetätigung verhindert, die einfach zu bedienen ist, die mechanisch einfach aufgebaut ist und universell mit verschiedenen Arten von Containern verwendbar ist.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einer Vorrichtung zur lösbaren Verriegelung eines Containers an einem Fahrzeugchassis wahlweise mittels eines axial verschiebbaren und in einen Verriegelungsbeschlag des Containers stirnseitig einführbaren Riegelbolzens oder mittels eines drehbaren und in den Verriegelungsbeschlag des Containers von unten einführbaren Drehverschlusses, wie es beispielsweise in der bereits genannten EP 0 878 352 B1 angegeben ist.

Erfindungsgemäß sind der Riegelbolzen und die Drehvorrichtung in einem gemeinsamen Gehäuse aufgenommen. Der Riegelbolzen und die Drehvorrichtung sind dabei gemeinsam betätigbar.

Das Gehäuse der Verriegelungsvorrichtung weist ein Drehlager zur Aufnahme des Drehzapfens sowie eine Längsbohrung zur Aufnahme des Riegelbolzens auf, wobei der Betätigungshebel zur Betätigung des Drehverschlusses und des Riegelbolzens um ein Lager parallel zum Drehlager schwenkbar ist, und wobei der Betätigungshebel mittels eines Gelenkzapfens in Eingriff mit dem Riegelbolzen und ferner mittels eines Mitnehmerbolzens in Eingriff mit dem Drehverschluss steht. Ein Verschwenken des Betätigungshebels bewirkt damit sowohl eine Verschiebung des Riegelbolzens als auch eine Drehung des Drehverschlusses.

Die Erfindung kombiniert unterschiedliche Verriegelungssysteme, nämlich die Verriegelung mittels in den Verriegelungsbeschlag des Containers stirnseitig einführbarer Riegelbolzen einerseits und andererseits einen in den Verriegelungsbeschlag des Containers von unten einführbaren Drehverschluss. Beide Verriegelungssysteme werden bei Betätigung gleichzeitig aktiviert, so dass es nicht möglicht ist, eine fehlerhafte Betätigung der Verriegelung auszuführen. Wenn ein Container stirnseitig an die Verriegelungsvorrichtung gesetzt ist, kommt der Riegelbolzen zum Einsatz, indem dieser stirnseitig in den Verriegelungsbeschlag des Containers eingreift. Wenn andererseits der Container auf die Verriegelungsvorrichtung aufgesetzt wird, kommt der Drehverschluss zum Einsatz, der von unten in den Verriegelungsbeschlag des Containers eingreift.

Die Betätigung des Riegelbolzens und der Drehvorrichtung erfolgen vorzugsweise mittels eines schwenkbaren Betätigungshebels. Die Betätigung kann alternativ auch mittels hydraulischer, pneumatischer, motorischer oder elektromagnetischer Auslösung erfolgen.

Gemäß einer bevorzugten Ausbildungsform der Erfindung ist ein Sensor, z. B. ein elektromagnetischer Sensor oder ein optischer Sensor, vorgesehen, um den Schließzustand der Verriegelungsvorrichtung festzustellen und in weiter bevorzugter Ausführungsform ein elektrisches Sensorsignal an eine Kontroll- oder Steuervorrichtung abzugeben. Auf diese Weise ist es möglich, dem Fahrer des Zugfahrzeugs den Verriegelungszustand des Containers auf dem Fahrzeugchassis z. B. in Form einer Kontrollanzeige am Armaturenbrett des Zugfahrzeugs anzuzeigen.

Der Gelenkzapfen zur Verbindung des Betätigungshebels mit dem Riegelbolzen ist vorzugsweise in einer Querbohrung des Riegelbolzens verankert und greift in einen ersten Längsschlitz des Betätigungshebels ein. Der Mitnehmerbolzen ist vorzugsweise am Umfang des Drehverschlusses befestigt und greift in einen zweiten Längsschlitz des Betätigungshebels ein. Die Verschwenkung des Betätigungshebels führt daher dazu, dass der Gelenkzapfen eine Verschiebung des Riegelbolzens und gleichzeitig der Mitnehmerbolzen eine Drehung des Drehverschlusses bewirkt. Der Drehverschluss ist vorzugsweise um 90° verschwenkbar.

Die Erfindung wird nachstehend anhand eines Ausführungsbeispiels näher erläutert. Es zeigen:
- Fig. 1: eine Seitenansicht der erfindungsgemäßen Vorrichtung,
- Fig. 2: eine Aufsicht,
- Fig. 3: eine Schnittansicht durch eine Einrichtung gemäß Fig. 1,
- Fig. 4: eine Schnittansicht entlang der Ebene D-D von Fig. 1,
- Fig. 5: eine Schnittansicht entlang der Ebene C-C von Fig. 3 in einer ersten Stellung des Handhebels,
- Fig. 6: eine Schnittansicht entlang der Ebene B-B von Fig. 3 in einer ersten Stellung des Handhebels,
- Fig. 7: eine Schnittansicht entlang der Ebene C-C von Fig. 3 in einer zweiten Stellung des Handhebels,
- Fig. 8: eine Schnittansicht entlang der Ebene B-B von Fig. 3 in einer zweiten Stellung des Handhebels,
- Fig. 9 a,b: zwei Ansichten des Riegelbolzens, und
- Fig. 10: eine Aufsicht auf die Drehscheibe.

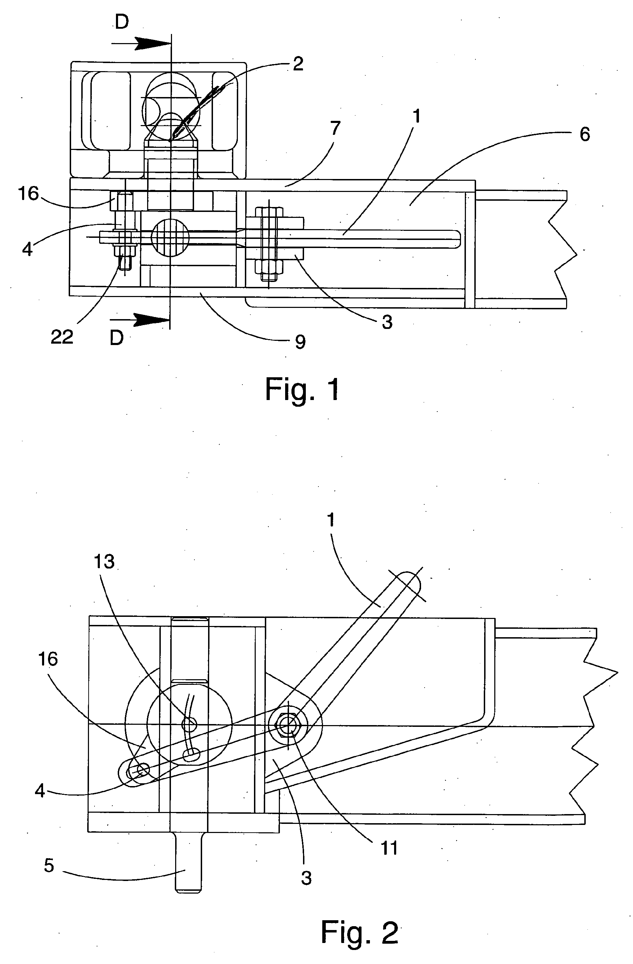

Die in Fig. 1 dargestellte Vorrichtung zeigt zwei parallele ein Gehäuse 6 bildende Platten 7, 9, die die verschiedenen Bewegungsblemente der Vorrichtung aufnehmen. An der Oberseite des Gehäuses befindet sich ein Drehzapfen 2, der in bekannter Weise der Befestigung eines Containers dient. Der Drehzapfen 2 ist um 90° verdrehbar, wobei er in einer Drehstellung einen Container verriegelt und in einer anderen Drehstellung einen Container freigibt. Der Drehzapfen 2 ist über die Drehscheibe 16 und einen Mitnehmerbolzen 4 mit einem Handhebel 1 gekoppelt, wobei der Mitnehmerbolzen parallel zur Druckachse des Drehzapfens an der Drehscheibe befestigt ist. Dieser ist in einer Hebelbuchse 3 im Gehäuse 6 gelagert.

Fig. 2 zeigt eine Aufsicht der Vorrichtung. In dieser Ansicht ist der Riegelbolzen 5 besonders herausgestellt, der sich unterhalb des Drehzapfens 2 befindet. Bei Verschwenkung des Handhebels 1 um die Hebelbuchse 3 mit Schraube 11 wird das dem Handgriff des Handhebels 1 gegenüberliegende Ende derart verschwenkt, dass die Drehscheibe 16 über den Mitnehmerbolzen 4 verschwenkt wird und gleichzeitig der Riegelbolzen 5 über den Gelenkzapfen 13 verschoben wird. Durch Betätigung des Handhebels 1 kann daher sowohl eine axiale Verschiebung des Riegelbolzens 5 als auch eine Verdrehung der Drehscheibe 16 und damit des Drehzapfens 2 erreicht werden.

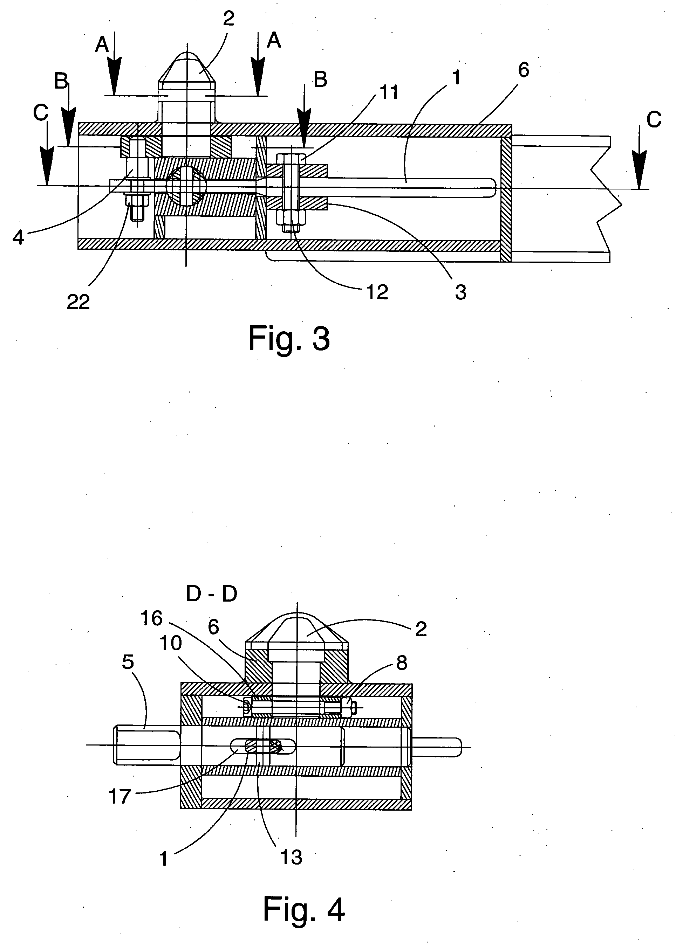

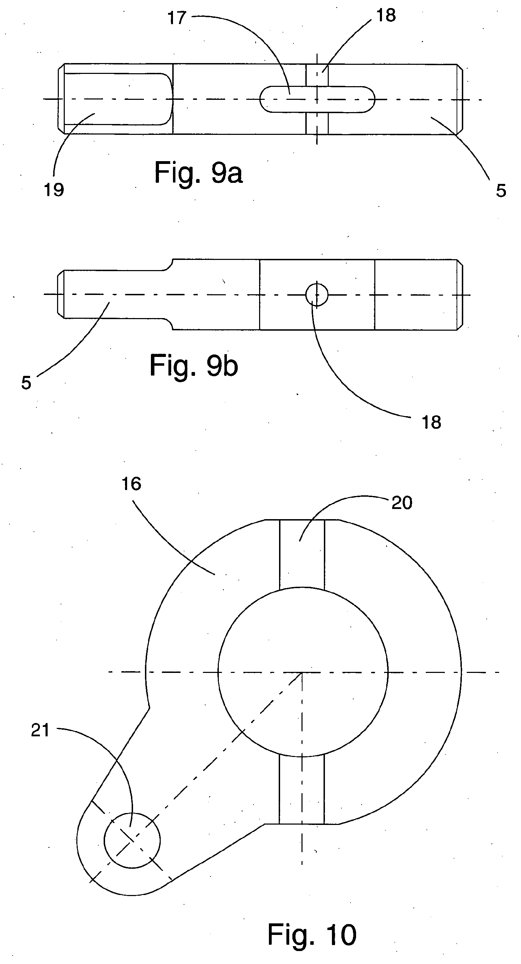

Fig. 3 zeigt eine Schnittansicht durch die erfindungsgemäße Vorrichtung. Der Handhebel 1 ist in der Hebelbuchse 3 über eine Schraube 11 mit Mutter 12 drehbar gelagert. Am anderen Ende nimmt der Handhebel 1 den Mitnehmerbolzen 4 auf, der mittels der Stoppmutter 22 an der Drehscheibe gesichert ist.

Fig. 4 zeigt eine Schnittansicht entlang der Ebene D-D von Fig. 1. Hier ist besonders erkennbar, dass die Drehscheibe 16 an dem Drehzapfen 2 mittels einer horizontal verlaufenden Klemmschraube 10 mit Stoppmutter 8 befestigt ist. Ferner ist die zentrale Lage des Riegelbolzens 5 im Gehäuse zu erkennen. Des Weiteren ist zu erkennen, dass der Handhebel 1 durch einen Spalt 17 des Riegelbolzens 5 hindurchgeführt ist und darin mittels eines vertikal verlaufenden Gelenkzapfens 13 gelagert ist.

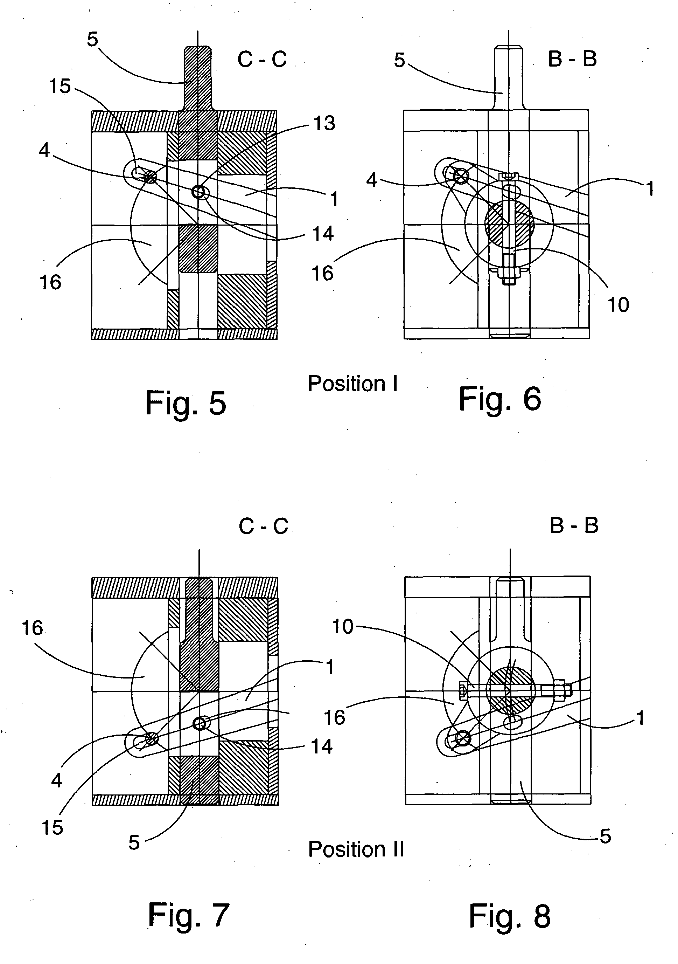

Fig. 5 ist eine Schnittansicht entlang der Ebene C-C von Fig. 3 und zeigt eine erste Position des Riegelbolzens 5, in der dieser voll ausgefahren ist und damit einen Befestigungsbeschlag eines Containers sichern kann. Der Handhebel 1 ist so verschwenkt, dass der Riegelbolzen 5 über den Gelenkzapfen 13 in die Verriegelungsstellung ausgefahren ist. Zur Anpassung der Schwenkbewegung des Handhebels 1 an die lineare Bewegung des Riegelbolzens 5 weist der Handhebel 1 ein erstes Langloch 14 auf. Bei der Betätigung des Handhebels 1 wird gleichzeitig die Drehscheibe 16, die mit dem Drehzapfen 2 verbunden ist, verdreht. Zum Ausgleich der unterschiedlichen Schwenkradien der Drehscheibe 16 und des Handhebels 1 ist ein zweites Langloch 15 im Handhebel 1 ausgebildet, in dem der Mitnehmerbolzen 4 aufgenommen ist.

Fig. 6 zeigt eine Ansicht entsprechend Fig. 5 in einer Ebene B-B gemäß Fig. 3. Hier ist deutlich die Befestigung der Drehscheibe 16 mittels der Klemmschraube 10 zu erkennen.

Fig. 7 zeigt den Riegelbolzen 5 in eingefahrener Stellung, die dadurch erreicht wird, dass der Handhebel 1 entsprechend verschwenkt wurde.

Fig. 8 zeigt eine entsprechende Ansicht entlang der Ebene B-B von Fig. 3. Gegenüber Fig. 6 ist die um 90° veränderte Drehstellung der Klemmschraube 10 zu sehen, so dass auch der Drehzapfen 2 um 90° gedreht ist.

Fig. 9a zeigt eine Seitenansicht des Riegelbolzens 5 mit eingearbeitetem Spalt 17 zur Durchführung des Handhebels 1 sowie der vorderseitigen Ausnehmung 19 zur Arretierung des Befestigungsbeschlages eines Containers. Fig. 9b zeigt den Riegelbolzen 5 in Aufsicht. In die Bohrung 18 ist der Gelenkzapfen 13 aufnehmbar.

In Fig. 10 ist die Drehscheibe 16 gezeigt, die eine Bohrung 20 aufweist, durch die die Klemmschraube 10 (siehe Figuren 6 und 8) geführt ist. In der Bohrung 21 ist der Mitnehmerbolzen 4 verankerbar.

Das Gehäuse 6 ist vorzugsweise als Schweißteil ausgebildet, es kann jedoch auch als Gussteil hergestellt sein. Die Betätigung des Handhebels 1 kann manuell erfolgen, es ist jedoch auch möglich, eine hydraulische, pneumatische, motorische oder elektromagnetische Betätigung vorzusehen. In diesem Fall ist es von Vorteil, wenn die Stellung der Verriegelungsvorrichtung durch einen Sensor erfasst wird, der den ausgefahrenen oder eingefahrenen Zustand des Riegelbolzens sowie die Drehstellung des Drehzapfens feststellt. Das entsprechende Sensorsignal kann an eine Kontroll- und Steuereinrichtung abgegeben werden, die beispielsweise ein entsprechendes Stellungssignal am Armaturenbrett des Fahrerhauses zur Anzeige bringt.

### Bezugszeichen

- 1: Handhebel
- 2: Drehzapfen
- 3: Lager
- 4: Mitnehmerbolzen
- 5: Riegelbolzen
- 6: Gehäuse
- 7: Platte
- 8: Stoppmutter
- 9: Platte
- 10: Klemmschraube
- 11: Schraube
- 12: Stoppmutter
- 13: Gelenkzapfen
- 14: erstes Langloch
- 15: zweites Langloch
- 16: Drehscheibe
- 17: Spalt
- 18: Bohrung
- 19: Aufnahme
- 20: Bohrung
- 21: Bohrung
- 22: Stoppmutter

## Patentansprüche

1. Vorrichtung zur lösbaren Verriegelung eines Containers an einem Fahrzeugchassis wahlweise mittels eines axial verschiebbaren und in einen Verriegelungsbeschlag des Containers stirnseitig einführbaren Riegelbolzens (5) oder mittels eines drehbaren und in den Verriegelungsbeschlag des Containers von unten einführbaren Drehzapfens (2), welche am Fahrzeugchassis befestigt sind, wobei das Gehäuse (6) ein Drehlager zur Aufnahme des Drehzapfens (2) und eine Längsbohrung zur Aufnahme des Riegelbolzens (5) aufweist, und der Riegelbolzen (5) und der Drehzapfen (2) gemeinsam betätigbar sind, **dadurch gekennzeichnet, dass** der Betätigungshebel (1) um ein Lager (3) parallel zum Drehlager des Drehzapfens (2) schwenkbar ist, und der Betätigungshebel (1) mittels eines Gelenkzapfens (13) in Eingriff mit dem Riegelbolzen (5) und mittels eines Mitnehmerbolzens (4) in Eingriff mit dem Drehzapfen (2) steht.

2. Vorrichtung nach Anspruch 1, **dadurch gekennzeichnet, dass** der Gelenkzapfen (13) quer durch einen Spalt (17) des Riegelbolzens (5) und durch ein erstes Langloch (14) des durch den Spalt des Riegelbolzens geführten Betätigungshebels (1) geführt ist.

3. Vorrichtung nach Anspruch 1, **dadurch gekennzeichnet, dass** der Mitnehmerbolzen (4) über eine Drehscheibe (16) am Umfang des Drehzapfens (2) befestigt ist und in zweites Langloch (15) des Betätigungshebels (1) eingreift.

4. Vorrichtung nach Anspruch 3, **dadurch gekennzeichnet, dass** der Drehzapfen (2) um 90° verschwenkbar ist.

5. Vorrichtung nach Anspruch 1, **dadurch gekennzeichnet, dass** die Betätigung des Riegelbolzens (5) und des Drehzapfens (2) mittels manueller, hydraulischer, pneumatischer, motorischer oder elektromagnetischer Betätigung erfolgt.

6. Vorrichtung nach Anspruch 5, **dadurch gekennzeichnet, dass** ein Sensor zur Feststellung des Schließ- oder Öffnungszustandes der Verriegelungsvorrichtung vorgesehen ist.

7. Vorrichtung nach Anspruch 6, **dadurch gekennzeichnet, dass** der Sensor den aus- oder eingefahrenen Zustand des Riegelbolzens (5) oder eine bestimmte Drehstellung des Drehzapfens (2) erfasst und ein entsprechendes Sensorsignal an eine Kontroll- und Steuereinrichtung abgibt.
